# EUROPÄISCHE PATENTSCHRIFT

(11) **EP 2 849 013 B1**
(45) Veröffentlichungstag und Bekanntmachung des Hinweises auf die Patenterteilung: **24.04.2019**
(21) Anmeldenummer: 14179245.7
(22) Anmeldetag: 31.07.2014
(51) Int. Cl.: G05B 19/4097, G05B 19/4093, B23F 23/00

(54) **Verfahren zum Rüsten einer Verzahnmaschine sowie Verzahnmaschine**
Method for setting up a gear cutting machine and gear cutting machine
Procédé d'équipement d'une machine à tailler les engrenages et machine à tailler les engrenages

(30) Priorität: 13.09.2013 DE 102013015239
(43) Veröffentlichungstag der Anmeldung: 18.03.2015
(73) Patentinhaber: Liebherr-Verzahntechnik GmbH, 87437 Kempten (DE)
(72) Erfinder: Karl, Thomas, 87471 Durach (DE); Heider, Marco, 87435 Kempten (DE)
(74) Vertreter: Laufhütte, Dieter

(56) Entgegenhaltungen:
- EP-A1- 1 431 851
- DE-A1-102011 052 314
- US-A- 5 377 116
- US-A- 5 822 206
- "Werkzeugvoreinstellgeräte PRECIset400/600 Die richtige Einstellung zum Erfolg!", , 11. Juni 2010 (2010-06-11), XP055220938, Gefunden im Internet: URL:http://www.fridro.si/doc2/novice/Ezset .pdf [gefunden am 2015-10-14]
- Dr Nicos Bilalis ET AL: "Report produced for the EC funded project INNOREGIO: dissemination of innovation and knowledge management techniques ES S SI I IG G GN N N Contents", , 31. Januar 2000 (2000-01-31), XP055220934, Gefunden im Internet: URL:http://www.adi.pt/docs/innoregio_cad-e n.pdf [gefunden am 2015-10-14]
- PRAZISIONSWERKZEUGE 11 Juni 2010, Gefunden im Internet: <URL:WWW.FRIDRO.SI/DOCS/NOVICE>

## Beschreibung

Die Erfindung betrifft ein Verfahren zum Rüsten einer Verzahnmaschine, wobei die Verzahnmaschine mit wenigstens einem rüstbaren Maschinenteil gerüstet wird und die das rüstbare Maschinenteil betreffenden Parameter in die Maschinensteuerung eingegeben werden.

Für die Bearbeitung von Werkstücken mit Verzahnung stehen unterschiedliche Verzahnverfahren zur Verfügung. Es existieren beispielsweise Verfahren zur Weichvorbearbeitung, Weichfeinbearbeitung und Hartfeinbearbeitung. Beispiele für spanende Verfahren sind das Wälzfräsen sowie Wälzstoßen. Für eine spanende Weichfeinbearbeitung stehen beispielsweise das Formschleifen sowie Wälzschleifen zur Verfügung.

Die erfolgreiche Anwendung jedes Verfahrens und die Realisierung geeigneter Prozessabläufe sind nur durch den Einsatz optimaler Maschinen, Werkzeug sowie Anwendungstechniken möglich. Hierzu werden verschiedene Plattformen bereitgestellt, die den Einsatz von werkstückspezifischem Zubehör ermöglichen. Je nach Anwendungsfall sowie Werkstück kann die Verzahnmaschine mit den passenden Maschinenteilen gerüstet werden. Als rüstbare Maschinenteile gelten Bearbeitungswerkzeuge, Vorrichtungen zum Aufspannen des Werkstückes sowie Werkstückgreifer, sofern eine Automation vorgesehen ist. Der Werkzeugbegriff umfasst dabei eine Werkzeugaufnahme, z.B. einen Werkzeugdorn, auf den ein oder mehrere Werkzeuge, wie Fräser, Schleifschnecke oder -scheibe aufgedornt sein können. Die genannten Vorrichtungen und Greifer können anwendungs- bzw. werkstückspezifisch sein und optimieren den Zugang zum aufgespannten Werkstück sowie dessen automatisierte Bearbeitung. Weiterhin fällt unter den Begriff des rüstbaren Maschinenteils das Werkstück selbst.

Für den gesteuerten Verzahnprozess benötigt die NC-Steuerung der Maschine präzise Parameterangaben, die die rüstbaren, d.h. variablen Maschinenteile, charakterisieren, insbesondere hinsichtlich ihrer geometrischen Abmessung oder Position zueinander. Die Parameter beinhalten unter Anderem Information zur Art des verwendeten Arbeitsdorns sowie die Anzahl und Positionierung der aufgedornten Werkzeuge.

Zum Rüsten der Verzahnmaschine ist die Konfiguration der Steuerung durch Eingabe dieser Parameter in Abhängigkeit des tatsächlichen Rüstzustandes notwendig. Oftmals muss vorab eine aufwändige manuelle Ausmessung der rüstbaren Maschinenteile erfolgen, um die notwendigen Parameter bereitstellen zu können. Beispielsweise wird der Arbeitsdorn von Hand ausgemessen und die jeweiligen Messdaten werden manuell über ein Bedienfeld in die Verzahnmaschine eingegeben. Neben den reinen Messdaten kann es notwendig sein, zusätzliche Daten vorab zu berechnen und nachfolgend einzugeben. Eine derartige Vorgehensweise ist jedoch fehleranfällig. Bereits kleinste Fehleingaben können weitreichende Konsequenzen haben, die von fehlerhaften Werkstücken bis hin zu einer erheblichen Schädigung der Verzahnmaschine aufgrund von Kollisionen reichen.

EP 1 431 851 A1 offenbart eine Einrichtung zur integrierten Werkzeugfertigung , wobei mittels einem Eingabemodul alle erforderlichen Bearbeitungsvorgänge und Messvorgänge abgefragt werden können und einem Bearbeitungsprogrammmodul und einem Programmmodul, welche auf denselben Datenbestand zurückgreifen, der beispielsweise durch ein Geometriemodel gegeben ist und der ein interaktives Erstellen eines Werkstücks am Bildschirm gestattet.

US 5 822 206 A offenbart ein System zur Erstellung eines Werkzeugs, eines Werkstücks und des entsprechenden Herstellungsprozesses, wobei in einer Datenbank Vorlagen von Werkstücken gespeichert sind, aus denen die Werkzeuge und der entsprechende Herstellprozess ableitbar sind.

Precitool Werkzeughandel GmbH & Co. KG: "Werkzeugvoreinstellgeräte PREClset400/600 Die richtige Einstellung zum Erfolg!" offenbart verschiedene Werkzeugvoreinstellgeräte, die Voreinstellungen von Werkzeugen vermessen und im Herstellprozess einstellen.

Der Gegenstand der vorliegenden Erfindung beschäftigt sich daher mit dieser Problematik beim Rüsten einer Verzahnmaschine. Hierbei soll nach einem verbesserten Verfahren zum Rüsten der Verzahnmaschine gesucht werden.

Gelöst wird diese Aufgabe durch ein Verfahren zum Rüsten einer Verzahnmaschine gemäß den Merkmalen des Anspruchs 1. Vorteilhafte Ausgestaltungen des Verfahrens sind Gegenstand der sich an den Hauptanspruch anschließenden Unteransprüche.

Gemäß Anspruch 1 wird also ein Verfahren zum Rüsten einer Verzahnmaschine vorgeschlagen, wobei die Verzahnmaschine mit wenigstens einem rüstbaren Maschinenteil gerüstet wird und die das gerüstete Maschinenteil betreffenden Parameter für den nachfolgenden Verzahnungsvorgang in die Maschinensteuerung eingegeben werden. Unter dem rüstbaren Maschinenteil ist insbesondere jegliches werkstückspezifische Zubehör der Verzahnmaschine zu verstehen. Darunter fallen vorzugsweise das zu bearbeitende Werkstück selbst sowie dafür vorgesehene Werkzeuge sowie gegebenenfalls eine Vorrichtung zum Aufspannen des Werkstückes und Greifer für die Automation.

Der Werkzeugbegriff umfasst nicht nur das Werkzeug selbst, sondern den vorgesehen Arbeitsdorn, auf dem ein oder mehrere gleichartige oder unterschiedliche Werkzeuge sowie Distanzringe, Spannmuttern oder anderweitige Komponenten angeordnet sein können.

Erfindungsgemäß erfolgt die Parametereingabe, d. h. die Eingabe der das gerüstete Maschinenteil betreffenden Parameter, über eine graphische Modellierung des Maschinenteils auf einem Anzeigeelement der Verzahnmaschine. Die Maschine bietet dem Anwender die Möglichkeit, das tatsächlich gerüstete Maschinenteil durch eine graphische Modellierung auf dem Anzeigeelement nachzustellen. Hierzu kann der Anwender das graphische Modell des Maschinenteils aus ein oder mehreren graphischen Teilkomponenten/Teilmodellen auf dem Anzeigeelement virtuell zusammensetzen. Das graphische Modell des Maschinenteils ist folglich anwendergesteuert aus ein oder mehreren graphischen Teilkomponenten virtuell auf einem Anzeigeelement der Verzahnmaschine zusammensetzbar. Beispielsweise bietet sich dem Anwender eine Auswahl verfügbarer Teilkomponenten/Teilmodelle, die jedes für sich graphisch darstellbar sind. Der Anwender kann ein oder mehrere Teilkomponenten/Teilmodelle auswählen und diese graphisch zu einem Modell des Maschinenteils zusammensetzen.

Die notwendigen Parameter für die Maschinensteuerung werden anschließend direkt aus der erstellten Modellierung abgeleitet und für die Verzahnbearbeitung der Maschinensteuerung bereitgestellt. Die notwendige Steuerungskonfiguration erfolgt quasi nicht mehr durch Eingabe nackter Zahlen, sondern visuell auf Grundlage einer graphischen Modellierung.

Die graphische Modellierung und Darstellung auf dem Anzeigeelement bietet dem Anwender die Möglichkeit zur visuellen Kontrolle seiner Eingabe. Der Anwender kann folglich das erstellte graphische Modell auf dem Anzeigeelement mit dem tatsächlich gerüsteten Maschinenteil abgleichen, offensichtliche Fehler fallen ins Auge und können von vornherein vermieden werden. Zusätzliche Berechnungsschritte entfallen vollständig. Dieses Verfahren reduziert die Wahrscheinlichkeit manueller Fehleingaben erheblich.

Durch Interaktion mit einem Bedienfeld bzw. dem Anzeigeelement kann der Anwender die graphische Modellierung präzise an das tatsächlich eingesetzte Maschinenteil anpassen.

Bevorzugt handelt es sich bei dem Maschinenteil um den Werkzeugdorn inklusive ein oder mehrerer Werkzeuge, Abstandshülsen, etc. und/oder das Werkstück selbst und/oder eine Vorrichtung zum Aufspannen des Werkstückes. Grundsätzlich kann die Konfiguration jeglichen rüstbaren Maschinenzubehörs auf Grundlage des erfindungsgemäßen Verfahrens erfolgen. Das Maschinenteil ist folglich mehrteilig und lässt sich variabel aus einzelnen Teilkomponenten zusammenstellen. Dies wird entsprechend auf die graphische Modellierung am Anzeigeelement der Verzahnmaschine angewendet.

Idealerweise wird die graphische Darstellung des wenigstens einen Maschinenteils bzw. der graphischen Teilkomponenten durch ein Rendering-Verfahren der Maschinensteuerung berechnet. Die dazu notwendigen Rohdaten bzw. Szene-Informationen sind in einer Datenbank der Verzahnmaschine hinterlegt.

In einer bevorzugten Ausgestaltung des Verfahrens erfolgt der Rendering-Prozess in Echtzeit und die zugrundeliegende Szene kann vom Bediener interaktiv verändert werden. Beispielsweise kann der Bediener durch Benutzereingabe den Sichtwinkel sowie den Zoom der Darstellung interaktiv verändern, die Berechnung des computerbasierten Modells erfolgt in Echtzeit und wird sofort auf dem Anzeigeelement visualisiert.

Sinnvollerweise ist das Anzeigeelement touchfähig, insbesondere multitouchfähig, so dass der Bediener durch Berührung des Anzeigeelementes die Szene des graphisch modellierten Maschinenteils bzw. der ein oder mehreren Teilmodelle/-komponenten verändern kann. Insbesondere wird ein multitouchfähiges Anzeigeelement verwendet, so dass sich die Szene interaktiv durch diverse Multifingergesten verändern lässt.

Für die graphische Modellierung wenigstens eines Maschinenteils kann der Nutzer auf eine Datenbank der Verzahnmaschine zurückgreifen. Das Maschinenteil kann auch aus einer Reihe von diversen Teilkomponenten zusammengesetzt werden, wie dies beispielsweise auf einen Arbeitsdorn zutrifft. Dem Nutzer bietet sich eine Auswahlmöglichkeit aus graphischen Teilmodellen, um den gerüsteten Arbeitsdorn virtuell zusammenzusetzen. Die Datenbank bietet ihm dazu unterschiedliche Dornarten, die virtuell mit passenden Werkzeugen sowie Abstandshülsen etc. bestückt werden können. Idealerweise kann der Anwender jeden tatsächlichen Arbeitsdorn maßstabsgetreu unter Verwendung der Datenbank graphisch modellieren. Die steuerungsrelevanten Parameter für die Maschinensteuerung werden automatisch aus der graphischen Modellierung abgeleitet und der Maschinensteuerung zugeführt. Eine manuelle Konfiguration der Verzahnmaschine bezüglich des verwendeten Maschinenteils ist nicht mehr notwendig.

Neben der rein visuellen Plausibilitätskontrolle des Anwenders erfolgt im Hintergrund eine virtuelle Plausibilitätskontrolle der graphischen Modellierung durch die Maschinensteuerung. Insbesondere wird hier überprüft und überwacht, ob die Eingaben, d. h. die graphische Modellierung, des Anwenders sinnvoll ist. Beispielsweise erfolgt die virtuelle Plausibilitätskontrolle unter Berücksichtigung eines geplanten Bearbeitungsprogramms zur Verzahnung und/oder unter Berücksichtigung der zusammengesetzten Komponenten eines Maschinenteils und/oder unter Berücksichtigung weiterer rüstbarer Maschinenteile. Vorstellbar ist eine Überwachung dahingehend, ob ein Arbeitsdorn aus einer sinnvollen Auswahl an Teilkomponenten zusammengesetzt ist. Auch wird überwacht, ob für die geplante Bearbeitung alle notwendigen Werkzeuge sowie die Vorrichtung zur Werkstückaufspannung und falls vorhanden die Greifer für die Automation gerüstet bzw. konfiguriert wurden.

Die Maschinensteuerung kann das Ergebnis der Plausibilitätskontrolle anzeigen und gegebenenfalls Warnmeldungen.

Denkbar ist es auch, dass die geometrische Modellierung des Maschinenteils bzw. wenigstens einer einzelnen Komponente des Maschinenteils durch Benutzereingabe modifizierbar ist. Der Anwender kann folglich nicht nur einzelne Maschinenteile bzw. Maschinenteilkomponenten aus der Datenbank auswählen, sondern diese individuell per Benutzereingabe in Echtzeit modellieren oder modifizieren, insbesondere hinsichtlich ihrer geometrischen Abmessung bzw. Positionierung, Lage oder Ausrichtung zu anderen Maschinenteilkomponenten etc.. Auch können etwaige Eigenschaften des Maschinenteils bzw. der Maschinenteilkomponente geändert und angepasst werden. Dies trifft insbesondere bei der Verwendung von unterschiedlichen Werkzeugen zu, die durch Benutzereingabe hinsichtlich ihrer Gangzahl, Zahnzahl, etc. an die tatsächlich verwendeten Maschinenteilkomponenten anpassbar sind.

Die Datenbank kann über eine entsprechende Schnittstelle befüllt werden, insbesondere durch ergänzende Einträge zu Maschinenteilen bzw. Maschinenteilkomponenten. Die Daten hierzu werden von manchen Werkzeugherstellern schon in geschützten Downloadbereichen zur Verfügung gestellt. In Zukunft können so auch Vorrichtungsdaten von den Vorrichtungsherstellern bereitgestellt werden. Dies trifft gleichermaßen für die notwendigen Rohdaten für den Rendering-Prozess zu.

Neben dem Verfahren betrifft die vorliegende Erfindung weiterhin eine Verzahnmaschine mit wenigstens einem Anzeigeelement, insbesondere einem berührungsempfindlichen, besonders bevorzugt einem multitouchfähigen Anzeigeelement, sowie einer Maschinensteuerung zur Durchführung des Verfahrens gemäß der Erfindung bzw. einer vorteilhaften Ausgestaltung der Erfindung. Die Verzahnmaschine weist offensichtlich dieselben Vorteile und Eigenschaften wie das erfindungsgemäße Verfahren auf, weshalb an dieser Stelle auf eine wiederholende Beschreibung verzichtet wird.

Des Weiteren betrifft die Erfindung eine auf einem Datenträger gespeicherte Steuerungssoftware, die auf einer Verzahnmaschine zur Durchführung des erfindungsgemäßen Verfahrens ausführbar ist.

Weitere Vorteile und Einzelheiten der Erfindung werden im Folgenden anhand eines in den Zeichnungen dargestellten Ausführungsbeispiels erläutert. Es zeigen:
- Figur 1:: mehrere Screenshots des Anzeigeelementes einer Verzahnmaschine während der erfindungsgemäßen virtuellen Aufdornung mit Fräsern (Chamfer-Cutter) und
- Figur 2:: das erfindungsgemäße virtuelle Aufdornungsverfahren mit Aufdornung eines Zylinderfräsers.

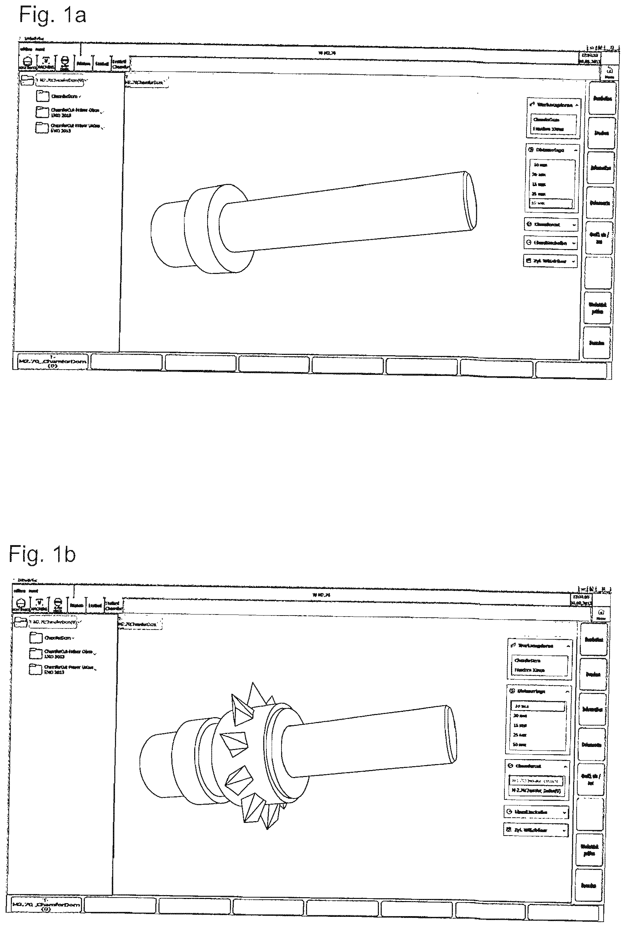

Das erfindungsgemäße Verfahren zur Konfiguration der NC-Steuerung einer Verzahnmaschine sowie die im Hintergrund ablaufende Plausibilitätskontrolle der Konfiguration soll im Folgenden anhand einer Reihe von Screenshots erläutert werden. Die Figuren 1a bis 1d zeigen eine Reihe chronologischer Screenshots des Bildschirms einer Verzahnmaschine, die exemplarisch den Vorgang der virtuellen Auf- bzw. Abdornung verdeutlichen. Der Bildschirm ist berührungsempfindlich, insbesondere multitouchfähig, so dass der Bediener seine Eingaben bequem per Bildschirmberührung, insbesondere durch Multifingergesten, vornehmen kann.

Für den Verzahnprozess soll ein Arbeitsdorn mit zwei nebeneinander positionierten Fräsern, in diesem Fall Chamfer-Cuttern, eingesetzt werden. Dieser angefertigte Arbeitsdorn wird in der Werkzeugaufnahme des Bearbeitungskopfs der Verzahnmaschine aufgenommen. Noch vor der Inbetriebnahme der Verzahnmaschine müssen zur Maschinenkonfiguration die benötigten Parameter des verwendeten Werkzeuges in die Maschinensteuerung eingegeben werden. Hierfür steht dem Bediener der berührungsempfindliche Bildschirm der Verzahnmaschine zur Verfügung.

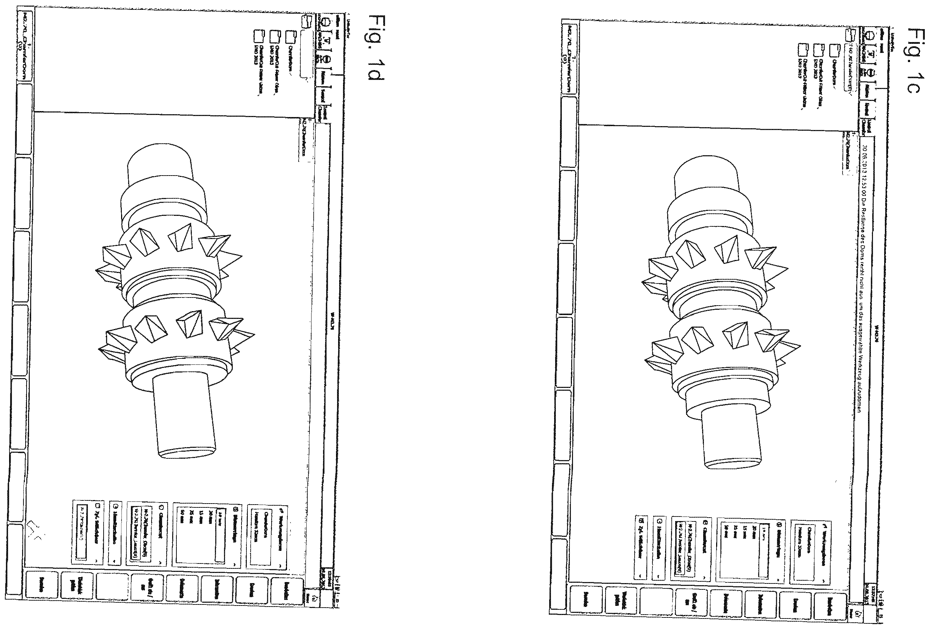

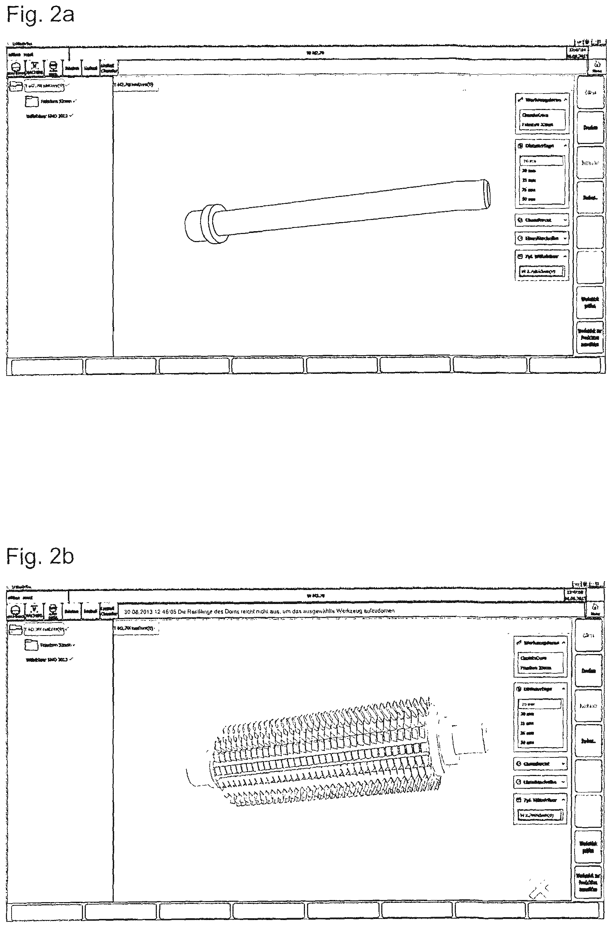

Über den Menüpunkt Werkzeuge in der oben eingeblendeten Bildschirmleiste gelangt der Bediener zur Werkzeugkonfiguration (siehe Figuren 1, 2), nach deren Auswahl in zentraler Bildschirmposition eine graphische 3D-Modellierung des virtuell gerüsteten Werkzeuges darstellbar ist. Über die virtuelle Rüstung bildet der Bediener das real verfügbare Werkzeug virtuell nach, die notwendigen Steuerparameter stehen der Maschinensteuerung automatisch zur Verfügung.

Neben dem zentral angeordneten 3D-Modell stehen dem Bediener diverse Auswahlmenüs für die Aufdornung verschiedener Komponenten zur Verfügung, wobei das erste Menü unterschiedliche Arbeitsdorne bereitstellt, das zweite Menü mehrere Varianten von Distanzhülsen anbietet und die nachfolgenden Menüs unterschiedliche Werkzeugtypen beinhalten. Zu jedem Werkzeugtyp werden noch unterschiedliche Untervarianten angeboten.

Zuerst wählt der Bediener einen passenden Dorn aus dem entsprechenden Menü aus. Nach erfolgter Auswahl wird unmittelbar ein 3D-Modell des Dorns berechnet und an zentraler Bildschirmposition eingeblendet. In der Figur 1b wurden zusätzlich zum Dorn ein Distanzring sowie ein Chamfer-Cutter als Werkzeug ausgewählt und virtuell aufgedornt. Der Bediener kann hier die Reihenfolge der ausgewählten Komponenten auf dem Dorn frei bestimmen. Konkret wurde ein Distanzring mit Ringstärke in Dornlängsrichtung von 10 mm ausgewählt.

In Figur 1c wurde zusätzlich ein weiterer Distanzring, ein weiterer Chamfer-Cutter und ein abschließender Distanzring aufgedornt. Weiterhin verdeutlicht die Figur 1c die aktive Plausibilitätskontrolle, die im Hintergrund parallel ausgeführt wird. Im Beispiel der Figur 1c hat der Anwender versucht, zusätzlich zur dargestellten Dornzusammensetzung einen zylindrischen Wälzfräser aufzudornen. Da auf dem Arbeitsdorn nicht ausreichend Platz zur Aufnahme verfügbar ist, wird in der oberen Statusleiste eine Warnmeldung mit Zeitstempel ausgegeben, um den Bediener auf die Fehleingabe hinzuweisen. Zusammen mit der Warnmeldung erhält der Bediener auch eine Begründung, nämlich dass die frei Restlänge des Dorns bereits erschöpft ist und für das ausgewählte Werkzeug nicht ausreicht.

Für das Abdornen kann der Nutzer die einzelnen Komponenten durch Anwahl, z.B. durch einen Doppelklick markieren und durch Ziehen (Drag & Drop) auf das im rechten unteren Bildschirmbereich eingeblendete kreuzartige Symbol entfernen. Figur 1d zeigt exemplarisch das farbig markierte Werkzeug in Form des zweiten Chamfer-Cutters, das durch Ziehen auf das kreuzartige Symbols entfernt werden soll.

Neben dem Auf- und Abdornvorgang kann der Bediener bequem durch Toucheingabe den Sichtwinkel auf den dargestellten Arbeitsdorn variieren. Dadurch erhält der Bediener eine virtuelle dreidimensionale Rundumansicht des virtuellen Arbeitsdorns, was die visuelle manuelle Plausibilitätskontrolle, d.h. den Abgleich mit dem tatsächlichen Maschinenteil vereinfacht.

Die Darstellung des Arbeitsdorns erfolgt durch ein Echtzeit-Rendering-Verfahren, das in Abhängigkeit der Bedienereingabe die 3D-Darstellung in Echtzeit berechnet und ausgibt. Aufgrund der vorliegenden Rendering-Informationen stehen der Maschinensteuerung zudem die notwendigen Parameter bezüglich des verwendeten Werkzeugs für die nachfolgende Verzahnarbeit zur Verfügung. Eine zusätzliche manuelle Eingabe ist nicht mehr erforderlich. Weiterhin liegen der Maschinensteuerung gegenüber bekannten Lösungen detailliertere Informationen über die gerüsteten Maschinenteile vor, die für eine optimierte Maschinensteuerung Berücksichtigung finden können.

Die Figuren 2a, 2b zeigen ebenfalls einen weiteren Aufdorn- bzw. Abdornvorgang, wobei jedoch kein Chamfer-Cutter, sondern ein zylindrischer Wälzfräser verwendet wird. Insbesondere in Figur 2b greift erneut die automatische Plausibilitätskontrolle ein. Hier wurde die Aufdornung eines weiteren Wälzfräsers abgelehnt, da der verfügbare Platz auf dem Arbeitsdorn nicht ausreichend ist. Die Abdornung der einzelnen Komponenten erfolgt analog zum dargestellten Vorgang der Figur 1d.

Neben der einfachen Auswahl der verfügbaren Einzelkomponenten bzw. Werkzeuge kann der Nutzer auch individuelle Modifikationen der ausgewählten Komponenten vornehmen. Insbesondere könnte beispielsweise der Wälzfräser hinsichtlich seines Umfangs bzw. sonstiger Eigenschaften modifiziert werden. Dem Bediener steht hierzu nach Auswahl der zu modifizierenden Komponente eine Eingabemaske zur Verfügung.

## Patentansprüche

1. Verfahren zum Rüsten einer Verzahnmaschine, wobei die Verzahnmaschine mit wenigstens einem rüstbaren Maschinenteil gerüstet wird und die das gerüstete Maschinenteil betreffenden Parameter für den nachfolgenden Verzahnungsvorgang der Maschinensteuerung zugeführt werden,
wobei es sich bei dem Maschinenteil um den Werkzeugdorn inklusive ein oder mehrerer Werkzeuge und/oder das Werkstück und/oder eine Vorrichtung zum Aufspannen des Werkstückes und/oder einen Greifer für die Maschinenautomation handelt,
**dadurch gekennzeichnet,**
**dass** ein graphisches Modell des Maschinenteils anwendergesteuert aus ein oder mehreren graphischen Teilkomponenten virtuell mittels Fingergesten auf einem berührungsempfindlichen, multitouchfähigen Anzeigeelement der Verzahnmaschine zusammengesetzt wird und die notwendigen Parameter für den nachfolgenden Verzahnungsvorgang direkt aus der graphischen Modellierung abgeleitet werden, wobei die graphische Modellierung durch ein Echtzeit-Renderingverfahren der Maschinensteuerung berechnet wird, wobei die notwendigen Rohdaten für die graphische Modellierung in einer Datenbank der Verzahnmaschine hinterlegt sind und wobei die zugrundeliegende Szene vom Bediener interaktiv unter Verwendung des Anzeigeelementes veränderbar ist.

2. Verzahnmaschine nach einem der vorhergehenden Ansprüche, **dadurch gekennzeichnet, dass** der Bediener durch Benutzereingabe den Sichtwinkel sowie den Zoom einer Darstellung des Modells interaktiv verändern kann, wobei die Berechnung des computerbasierten Modells in Echtzeit erfolgt und sofort auf dem Anzeigeelement visualisiert wird.

3. Verfahren nach einem der vorhergehenden Ansprüche, **dadurch gekennzeichnet, dass** das wenigstens eine Maschinenteil und/oder die Zusammensetzung des wenigstens einen Maschinenteils aus Einzelkomponenten für die graphische Darstellung aus der Datenbank der Verzahnmaschine auswählbar ist.

4. Verfahren nach Anspruch 3, **dadurch gekennzeichnet, dass** eine virtuelle Plausibilitätskontrolle der graphischen Modellierung erfolgt, insbesondere unter Berücksichtigung eines geplanten Bearbeitungsprogramms und/oder unter Berücksichtigung der zusammengesetzten Einzelkomponenten eines Maschinenteils und/oder unter Berücksichtigung weiterer rüstbarer Maschinenteile.

5. Verfahren nach Anspruch 4, **dadurch gekennzeichnet, dass** unter Berücksichtigung des geplanten Bearbeitungsprogramms überwacht wird, ob für die geplante Bearbeitung alle notwendigen Werkzeuge sowie die Vorrichtung zur Werkstückaufspannung und falls vorhanden die Greifer für die Automation gerüstet bzw. konfiguriert wurden, wobei die Maschinensteuerung das Ergebnis der Plausibilitätskontrolle anzeigen und ggf. Warnmeldungen ausgeben kann.

6. Verfahren nach einem der vorhergehenden Ansprüche, **dadurch gekennzeichnet, dass** die geometrische Modellierung des Maschinenteils bzw. einer einzelnen Komponente des Maschinenteils mittels Benutzereingabe modifizierbar ist, vorzugsweise hinsichtlich seiner geometrischen Abmessung und/oder hinsichtlich seiner spezifischen Eigenschaften wie Gangzahl, Zahnzahl, Zahnflankenform etc..

7. Verfahren nach einem der vorhergehenden Ansprüche, **dadurch gekennzeichnet, dass** die Datenbank über eine Schnittstelle mit weiteren Einträgen zu Maschinenteilen bzw. Maschinenteilkomponenten erweiterbar ist.

8. Verzahnmaschine mit wenigstens einem berührungsempfindlichen, multitouchfähigen Anzeigeelement und einer Maschinensteuerung zur Durchführung des Verfahrens nach einem der vorhergehenden Ansprüche.

9. Auf einem Datenträger gespeicherte Steuerungssoftware zur Ausführung des Verfahrens gemäß einem der Ansprüche 1 bis 7 auf einer Verzahnmaschine gemäß Anspruch 8.

## Claims

1. A method of setting up a gear cutting machine, wherein the gear cutting machine is equipped with at least one machine part which can be set up and the parameters relating to the set-up machine part are input into the machine control for the subsequent gear cutting process,
wherein the machine part is the tool mandrel, including one or more tools, and/or the workpiece and/or an apparatus for clamping the workpiece and/or a gripper for the machine automation,
**characterized in that**
a graphical model of the machine part is virtually composed by finger gestures on a touch-sensitive, multitouch-operable display element of the gear cutting machine in a user-controlled manner from one or more graphical part components and the required parameters for the following gear cutting process are derived directly from the graphical modeling, with the graphical modeling being calculated by a real-time rendering process of the machine control, with the required raw data for the graphical modeling being stored in a database of the gear cutting machine; and with the underlying scene being interactively variable by the operator using the display element.

2. A gear cutting machine in accordance with one of the preceding claims, **characterized in that** the operator can vary the angle of view and the zoom of a representation of the model interactively by user input, with the calculation of the computer-based model taking place in real time and being immediately visualized on the display element.

3. A method in accordance with one of the preceding claims, **characterized in that** at least one machine part and/or the composition of the at least one machine part can be selected from individual components for the graphical representation from the database of the gear cutting machine.

4. A method in accordance with claim 3, **characterized in that** a virtual plausibility check of the graphical modeling takes place, in particular while taking account of a planned machining program and/or while taking account of the composed individual components of a machine part and/or while taking account of further machine parts which can be set up.

5. A method in accordance with claim 4, **characterized in that** it is monitored whether all the tools required for the planned machining as well as the apparatus for clamping the workpiece and, if present, the grippers for the automation were set up and/or configured while taking account of the planned machining program, with the machine control being able to display the result of the plausibility check and optionally being able to output warning messages.

6. A method in accordance with one of the preceding claims, **characterized in that** the geometrical modeling of the machine part or of an individual component of the machine part can be modified by means of user input, preferably with respect to its geometrical dimension and/or with respect to its specific properties such as number of gears, number of teeth, tooth flank shape, etc.

7. A method in accordance with one of the preceding claims, **characterized in that** the database can be expanded via an interface with further entries on machine parts or on machine part components.

8. A gear cutting machine having at least one touch-sensitive, multitouch-operable display element and having a machine control for carrying out the method in accordance with one of the preceding claims.

9. Control software stored on a data carrier for carrying out the method in accordance with one of the claims 1 to 7 on a gear cutting machine in accordance with claim 8.

## Revendications

1. Procédé d'équipement d'une machine à tailler les engrenages, la machine à tailler les engrenages étant équipée avec au moins un organe de machine pouvant être monté et les paramètres concernant l'organe de machine monté étant transmis à la commande de machine pour le processus suivant de taille des engrenages,
l'organe de machine étant la broche pour outil y compris un ou plusieurs outils et/ou la pièce à usiner et/ou un dispositif de serrage de la pièce à usiner et/ou un préhenseur pour l'automatisation des machines,
**caractérisé en ce que**
un modèle graphique de l'organe de machine est assemblé virtuellement de manière commandée par l'utilisateur à partir d'un ou de plusieurs composants partiels graphiques au moyen de gestes avec les doigts sur un élément d'affichage sensible au toucher multitactile de la machine à tailler les engrenages et les paramètres nécessaires pour le processus suivant de taille des engrenages étant dérivés directement de la modélisation graphique, la modélisation graphique étant calculée par un procédé de rendu en temps réel de la commande de machine, les données brutes nécessaires pour la modélisation graphique étant enregistrées dans une base de données de la machine à tailler les engrenages et
la scène servant de base pouvant être modifiée par l'utilisateur de manière interactive au moyen de l'élément d'affichage.

2. Machine à tailler les engrenages selon l'une des revendications précédentes, **caractérisée en ce que** l'utilisateur peut modifier de manière interactive l'angle de vue ainsi qu'un zoom d'une représentation du modèle par une saisie de l'utilisateur, le calcul du modèle informatisé étant effectué en temps réel et immédiatement visualisé sur l'élément d'affichage.

3. Procédé selon l'une des revendications précédentes, **caractérisé en ce que** l'au moins un organe de machine et/ou l'assemblage de l'au moins un organe de machine à partir de composants individuels peut être sélectionné pour la représentation graphique dans la base de données de la machine à tailler les engrenages.

4. Procédé selon la revendication 3, **caractérisé en ce qu'**un contrôle de vraisemblance virtuel de la modélisation graphique est effectué, en particulier en tenant compte d'un programme d'usinage prévu et/ou en tenant compte des composants individuels assemblés d'un organe de machine et/ou en tenant compte d'autres organes de machine pouvant être montés.

5. Procédé selon la revendication 4, **caractérisé en ce que**, compte tenu du programme d'usinage prévu, il est surveillé si pour l'usinage prévu, tous les outils nécessaires ainsi que le dispositif de serrage de la pièce à usiner et le cas échéant les préhenseurs pour l'automatisation ont été montés ou configurés, la commande de machine pouvant afficher le résultat du contrôle de vraisemblance et le cas échéant émettre des signaux d'avertissement.

6. Procédé selon l'une des revendications précédentes, **caractérisé en ce que** la modélisation géométrique de l'organe de machine ou d'un composant individuel de l'organe de machine peut être modifiée au moyen d'une saisie de l'utilisateur, de préférence en ce qui concerne son dimensionnement géométrique et/ou en ce qui concerne ses propriétés spécifiques telles que le nombre de pas, le nombre de dents, la forme des flancs de dent, etc..

7. Procédé selon l'une des revendications précédentes, **caractérisé en ce que** la base de données peut être étendue avec d'autres entrées concernant des organes de machine ou des composants d'organe de machine par le biais d'une interface.

8. Machine à tailler les engrenages comprenant au moins un élément d'affichage sensible au toucher multitactile et une commande de machine pour l'exécution du procédé selon l'une des revendications précédentes.

9. Logiciel de commande enregistré sur un support de données pour l'exécution du procédé selon l'une des revendications 1 à 7 sur une machine à tailler les engrenages selon la revendication 8.
